(19) Europäisches Patentamt / European Patent Office / Office européen des brevets

(11) **EP 2 433 113 B1**

(12) **EUROPEAN PATENT SPECIFICATION**

(45) Date of publication and mention of the grant of the patent:
**04.06.2014 Bulletin 2014/23**

(21) Application number: **10720326.7**

(22) Date of filing: **11.05.2010**

(51) Int Cl.:
***C01B 33/027*** *(2006.01)* ***G01N 21/27*** *(2006.01)*
***G01N 21/65*** *(2006.01)*

(86) International application number:
**PCT/US2010/034352**

(87) International publication number:
**WO 2010/135105 (25.11.2010 Gazette 2010/47)**

(54) **QUANTITATIVE MEASUREMENT OF GAS PHASE PROCESS INTERMEDIATES USING RAMAN SPECTROSCOPY**

QUANTITATIVE MESSUNG VON GASPHASENPROZESS-ZWISCHENPRODUKTEN MITTELS RAMANSPEKTROSKOPIE

MESURE QUANTITATIVE D'INTERMÉDIAIRES UTILISÉS DANS UN PROCESSUS EN PHASE GAZEUSE PAR SPECTROSCOPIE RAMAN

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.05.2009 US 180446 P**

(43) Date of publication of application:
**28.03.2012 Bulletin 2012/13**

(60) Divisional application:
**12176590.3 / 2 514 716**

(73) Proprietors:
- **Dow Corning Corporation**
  **Midland, Michigan 48686-0994 (US)**
- **Hemlock Semiconductor Corporation**
  **Hemlock, MI 48626 (US)**

(72) Inventors:
- **HARMS, Greg**
  **Durham, NC 27713 (US)**
- **KRESZOWSKI, Douglas**
  **Saginaw, MI 48638 (US)**
- **LICHT, David**
  **Midland, MI 48642 (US)**
- **LIPP, Elmer**
  **Midland, MI 48642 (US)**
- **MOLNAR, Mike**
  **Freeland, MI 48623 (US)**
- **PINET, Marc**
  **Freeland, MI 48623 (US)**

(74) Representative: **Müllejans, Inge et al**
**Murgitroyd & Company**
**Scotland House**
**165-169 Scotland Street**
**Glasgow G5 8PL (GB)**

(56) References cited:
**GB-A- 2 361 767**
**US-A1- 2005 154 129**
**US-A1- 2006 100 793**
**US-A1- 2008 180 661**
**US-B1- 6 723 804**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 433 113 B1

## Description

The subject matter described herein relates to the quantitative measurement of gas phase intermediates in chemical production processes using Raman spectroscopy. In one embodiment, the gas phase reactants in a process for the production of high purity polysilicon are quantitatively measured in real time to provide a dynamic assessment of process equilibria.

High-purity semiconductor grade silicon is typically prepared by one of a number of known processes including the so-called "Siemens process." In the Siemens process, a mixture comprising hydrogen and silane ($SiH_4$) or a mixture comprising hydrogen and trichlorosilane ($HSiCl_3$) is fed to a decomposition reactor containing substrate rods which are maintained at a temperature of more than 1000° C. The following chemical equilibria and kinetics control the reactions as follows:

$$4\ HSiCl_3 \overset{\Delta}{\rightleftharpoons} Si_{polycrystalline} + 3\ SiCl_4 + 2\ H_2$$

$$H_2 + SiCl_4 \rightleftharpoons HSiCl_3 + HCl$$

Silicon is deposited on the substrate, and by-product gas mixtures exit in a vent stream. When a mixture comprising hydrogen and trichlorosilane is used, the vent stream may include hydrogen, hydrogen chloride, chlorosilanes, silane, and silicon powder. The vent stream is passed through a complex recovery process where condensations, scrubbing, absorption and adsorption are unit operations often used to facilitate the capture of feed material trichlorosilane and hydrogen for recycle.

One alternate process is to feed a gaseous mixture comprising hydrogen and silane or a mixture comprising hydrogen and trichlorosilane to a fluidized bed containing silicon beads that are maintained at a high temperature. The silicon beads grow in size during the reaction process, and when large enough, are passed out the bottom of the fluidized bed reactor as product. The vent gases exit the top of the reactor and are sent through a recovery process similar to that used in the Siemens process.

More recently, aspects of the Siemens process have been combined with a fluidized bed process to provide improved efficiency in the production of high-purity silicon. See, Arvidson et al., U.S. Pub. No. 2008/0056979, where vent gases from a Siemens process reactor were used as feed gases in a fluidized bed reactor in a process for producing high purity silicon.

Because the yield and purity of the silicon product is dependent upon many factors including reactant gas feed rates and concentrations, temperatures, and pressures, deviations, even small deviations, from optimal values may cause a drop in the yield of the product and/or introduce undesirable contaminants into the product. Accordingly, it would be desirable to be able to monitor all of the reactants involved in substantially real time so that deviations from optimal values could be detected and corrected quickly.

US 2005/0154129 discloses a method for quantitatively monitoring gas phase materials within the conduit of a polyolefin production system by Raman spectrometry. The phase of an organic material in a thin film is characterized in US 2006/0100793 by subjecting the film to a vibrational spectroscopy measurement to obtain a resulting spectrum, which is then compared to spectra in the reference library to characterize the phase of the organic material. According to US 6,723,804 one or more polymerization conditions are adjusted in response to concentrations of reactants, products or other chemical components which have been monitored by Raman spectroscopy. GB 2361767 A discloses a method for determining the Raman spectrum of a mixture, where the Raman spectrum of the mixture is frequency drift corrected and/or intensity normalised with respect to Raman spectral band or sapphire measured under the same conditions and at the same time as the Raman spectrum of the mixture.

However, existing test methods have drawbacks in monitoring gas phase intermediates for polysilicon production processes. Gas chromatography has been used in the past to monitor concentrations of various gases in feed or product streams. However, the results from gas chromatography sampling are relatively slow, taking on average several minutes for analysis. While Fourier transform infrared spectroscopy (FTIR) has also been utilized as a monitoring methodology, hydrogen gas is invisible to FTIR instruments. Thus, known methodologies suffer from several drawbacks such as an inability to produce real time results, lack the necessary sensitivity, lack needed repeatability, or are unable to measure all of the gases of interest simultaneously.

Accordingly, there remains a need for a monitoring and control method that can quantitatively and simultaneously measure all of the gases used in chemical manufacturing processes such as polycrystalline silicon production processes and provide substantially real time results with the desired sensitivity and repeatability.

Those needs are addressed by embodiments of the present invention which provide quantitative, repeatable, accurate, real-time measurements of gases and mixtures of gases used in chemical manufacturing processes such as

the production of high purity polysilicon.

The present invention is directed to a method for quantitatively monitoring gas phase materials in a chemical process according to claim 1. The method comprises providing a gaseous feed stream containing one or more reactant gases of interest, and exposing the gaseous feed stream to coherent radiation from a Raman spectroscopic device which has been previously calibrated.

The calibration is performed by selecting peaks in a Raman spectrum for each gas of interest in said gaseous feed stream, each peak including a low frequency point and a high frequency point, and collecting Raman spectra for known concentrations for each gas of interest. The peak areas of the selected peaks are then calculated. A reference peak in a Raman spectrum for a reference material in the Raman spectroscopic device is selected, with the reference peak also including a low frequency point and a high frequency point. Raman spectra is collected for the reference material, and a reference peak area for the reference material is calculated. Any peak area adjustments due to peak overlap from the selected peaks and the reference peak are determined, and the contribution to the peak area of the selected peak of the reference peak is removed. The ratios of the selected peak areas for each gas of interest are determined with the reference peak area to establish calibration constants for each gas of interest.

A Raman spectroscopic signal from each of the gaseous components in the feed stream is acquired, and the spectroscopic signal is analyzed to determine the presence and concentration of each of said gaseous components. The results of the analysis are displayed. In embodiments of the invention, the relative amounts of the gaseous components of the feed stream may be adjusted based on the analysis of the spectroscopic signal.

According to the invention, the peak area adjustment is determined by spectral peak area ratios, i.e., the peak area adjustment is determined by selecting a second peak area in the Raman spectra of the reference material that has no overlap with the selected peak, calculating the ratio of the area of the reference peak with the second reference peak to determine a peak area ratio adjustment factor; and applying the peak area adjustment factor to selected peak areas for the gases of interest. In one embodiment, the calibration constants for each gas of interest are determined by calculating the ratios of the selected peak areas with a selected reference peak area, wherein

$$\text{Ratio} = \frac{\text{Peak Area of Selected Gas} - \text{Peak Area of Reference Material} \times \text{Area Adjustment Factor}}{\text{Peak Area of Reference Material}}$$

and plotting calculated ratios against known concentration values for the selected gas of interest to create a linear regression model.

Furthermore, and not within the scope of the present invention, a method for quantitatively monitoring gas phase materials in a process for making high purity silicon is described and comprises, providing a gaseous feed stream containing one or more of $H_2$, HCl, $SiH_4$, $H_3SiCl$, $HSiCl_3$, $H_2SiCl_2$, $SiCl_4$ or $N_2$, exposing the gaseous feed stream to radiation from a Raman spectroscopic device, acquiring a Raman spectroscopic signal from each of the gaseous components in the feed stream, analyzing the spectroscopic signal to determine the presence and concentration of each of the gaseous components; and displaying the results of the analysis. The method may include adjusting the relative amounts of the gaseous components of the feed stream based on the analysis of the spectrographic signal.

The Raman spectroscopic device may be calibrated by selecting peaks in a Raman spectrum for each gas of interest in the gaseous feed stream, each peak including a low frequency point and a high frequency point; collecting Raman spectra for known concentrations for each gas of interest; and calculating the peak areas of the selected peaks. A reference peak is selected in a Raman spectrum for a reference material in said Raman spectroscopic device, with the reference peak including a low frequency point and a high frequency point. Raman spectrum is collected for the reference material, and a reference peak area for the reference material is calculated.

Any peak area adjustments due to peak overlap from the selected peaks and the reference peak are identified and the contribution to the peak area of the selected peak of the reference peak is removed. In one embodiment, this may be accomplished by calculating the ratios of the selected peak areas for each gas of interest with the reference peak area to establish calibration constants for each gas of interest. The peak area adjustment may be determined by spectral subtraction, spectral deconvolution, or spectral peak area ratios.

In one example, the peak area adjustment is determined by selecting a second peak area in the Raman spectra of the reference material that has no overlap with the selected peak, and calculating the ratio of the area of the reference peak with the second reference peak to determine a peak area ratio adjustment factor. The peak area adjustment factor is applied to selected peak areas for the gases of interest.

In this example, the calibration constants for each gas of interest are determined by calculating the ratios of the selected peak areas with a selected reference peak area, wherein

$$\text{Ratio} = \frac{\text{Peak Area of Selected Gas} - \text{Peak Area of Reference Material} \times \text{Area Adjustment Factor}}{\text{Peak Area of Reference Material}}$$

and plotting the calculated ratios against known concentration values for the selected gas of interest to create a linear regression model.

Furthermore, a method for producing high purity polycrystalline silicon is described and comprises providing a gaseous feed stream containing $H_2$, and at least one silane selected from $SiH_4$, $HSiCl_3$, $H_2SiCl_2$, or $SiCl_4$ and reacting the components of the gaseous feed stream to form high purity polycrystalline silicon. Contemporaneously with the reaction, the gases in said gaseous feed stream are monitored by exposing the gaseous feed stream to coherent laser radiation from a Raman spectroscopic device; acquiring a Raman spectroscopic signal from each of the gaseous components in the feed stream; analyzing the spectroscopic signal to determine the presence and concentration of each of the gaseous components and to detect any deviations from predetermined values for each of the gaseous components; and adjusting the feed rate of any of the gaseous components that deviate from such predetermined values.

In other examples, gas feed stream components for other chemical processed may be quantitatively measured to provide a dynamic assessment of process equilibria. For example, gas feed stream components, including $H_2$ and $SiCl_4$, used in the process of hydrogenating silicon tetrachloride to form, for example, trichlorosilane ($HSiCl_3$) and dichlorosilane ($H_2SiCl_2$) may be monitored and measured. Thus, a method for hydrogenating silicon tetrachloride is provided and comprises providing a gaseous feed stream containing $H_2$ and $SiCl_4$ and reacting the components of the gaseous feed stream to form at least one of trichlorosilane and dichlorosilane. Contemporaneously with the reaction, the gases in said gaseous feed stream are monitored by exposing the gaseous feed stream to coherent radiation from a Raman spectroscopic device; acquiring a Raman spectroscopic signal from each of the gaseous components in the feed stream; analyzing the spectroscopic signal to determine the presence and concentration of each of the gaseous components and to detect any deviations from predetermined values for each of the gaseous components; and adjusting the feed rate of any of the gaseous components that deviate from such predetermined values.

Accordingly, it is a feature of the present invention to provide quantitative, repeatable, accurate, real-time measurements of gases and mixtures of gases used in chemical manufacturing processes such as the production of high purity polysilicon. Other features and advantages of the present invention will be apparent from the following detailed description, the accompanying drawings, and the appended claims.

The following detailed description of specific embodiments of the present invention can be best understood when read in conjunction with the following drawings, where like structure is indicated with like reference numerals and in which:

Fig. 1 is a schematic illustration of the quantitative monitoring apparatus used in the practice of embodiments of the present invention; and

Fig. 2 is a schematic flow diagram of one process for the manufacture of high purity polycrystalline silicon which can utilize the quantitative monitoring process of the present invention.

Embodiments of the present invention provide quantitative measurement of gaseous substances used in chemical manufacturing processes. Although one example is directed to processes for the manufacture of polycrystalline silicon, it will be understood that the techniques described herein may be applied to any chemical manufacturing process that utilizes gaseous phase reactants whose relative concentrations need to be monitored and controlled in substantially real-time.

The present invention utilizes Raman spectrometry. Raman spectrometry is a form of vibrational spectrometry which utilizes a laser to illuminate a sample and analyzes the reflected or backscattered radiation. Single wavelength lasers are commercially available for use in Raman spectrometry. Examples include, but are not limited to, a 785nm red laser and a 532nm green laser. The energy shift between the measured reflected radiation and the laser line, i.e., the wavelength of the laser, is equal to the vibrational frequencies of the bonds in the molecules being illuminated. The vibrational frequencies depend on the masses of the atoms in the molecules and on the strength of the interatomic bonds within the molecule; with different bonds being characterized by specific frequencies. The vibrational frequency may also depend on the geometric arrangement of atoms in the molecules.

A Raman spectrum generally comprises a plot of the intensity by the energy shift, i.e., Raman shift, of the scattered radiation. In particular, each observation or data point at a wavelength shift from the incident laser line, which herein are referenced as wavenumbers (measured in $cm^{-1}$) so to be consistent with common spectroscopy references for vibrational and rotational structure of molecules, comprises a count at that wavelength shift. A plot of the aggregated counts at each wavenumber yields the Raman spectrum for the sample during the measured time period. For pure samples, the spectrum may be used to directly identify the sample. For complex mixtures or solutions, the frequency composition may be broken down by statistical analyses using known techniques to determine the composition of the

sample. In practice, the peak distribution associated with a chemical may serve as a known signature or fingerprint for recognizing that chemical within a mixture or solution. In addition to these quantitative and qualitative advantages, Raman spectrometry has the additional advantages of being spatially resolved, i.e., resolvable at a depth within a sample, and of providing rapid, near-instantaneous response because sample preparation is generally not required.

A Raman spectroscopic system suitable for use in the practice of the described embodiments herein is depicted in FIG. 1. As depicted the system 10 may include a laser source 12 which generates laser radiation of one or more specified wavelengths and a detector 13 which detects reflected wavelengths from reactant gases flowing through a sample line 11 diverted from a feed stream 15. The laser radiation is transmitted to a Raman probe 14 via a fiber optic cable 16. The cable 16 may be connected to the probe 14 via an optical connector at the end of the probe or may be integrally connected to the probe. The cable 16 is typically comprised of two or more fiber optic strands with a portion of the strands, such as the core strands 14a, configured to carry the laser radiation from laser source 12 to the probe 14 and the remainder of the strands, i.e. the periphery strands 14b, being configured to carry the scattered radiation back to detector 13. The laser radiation passes to and from the sample via a lens 20 at the tip of the probe 14 which is substantially transparent to the incoming and outgoing wavelengths of light.

Detector 13 may process the scattered radiation to form one or more spectra associated with the sample. Detector 13 typically provides scattered radiation data or spectra to a workstation 22 or computer, for further processing. Workstation or computer 22 may be configured to control the activities of detector 13 and may communicate with other processor-based systems, such as one or more remote computers which are utilized to control the chemical process. In a preferred form, the workstation may be a RamanRXN3™ Analyzer, commercially available from Kaiser Optical Systems, Inc. While an exemplary Raman spectrographic system has been depicted, it will be apparent to those skilled in the art that various modifications may be made.

The probe and lens may incorporate various features designed to protect the probe from potentially corrosive environments in the gaseous feed stream. Suitable probe designs for use in the described embodiments herein are Pilot™ E and Pilot™ S-probes and AirHead™ probes, all commercially available from Kaiser Optical Systems, Inc. Such probes include a sapphire lens. Such probes are designed to be immersed into gaseous streams that may be at elevated temperatures and/or contain corrosive gases. Other commercially available probes may also be utilized.

Calibration of the Spectrographic System

Probe 14 and the associated instrumentation of the Raman spectrographic system are typically calibrated to provide consistent Raman shift and intensity responses in any acquired spectral data. In a preferred embodiment, calibration is accomplished by selecting the desired set of gaseous reactants to be monitored in the feed stream, measuring the peak area counts for given band frequencies at known concentrations, and applying a linear regression fit. To insure that the system will reliably and repeatably identify such gases and their respective concentrations, the peak area counts for each gas are ratioed to a sapphire reference vibration peak. The sapphire area count is measured simultaneously with the gases flowing in the feed stream. This ratioing technique provides a process in which the method detection limits are between about 0.1% to about 0.8% with a repeatability between about 0.05% to about 0.2%. The method detection limits for $H_2$, $N_2$, HCl, $SiH_4$, $H_3SiCl$, $H_2SiCl_2$, $HSiCl_3$, and $SiCl_4$ were estimated by taking a three standard deviation of a set of twenty measurements performed in the absence of these gas components. Different gas components provided different detection limits. The repeatability was also estimated for some of the gas components ($H_2$, $N_2$, HCl, $H_2SiCl_2$, $HSiCl_3$, and $SiCl_4$) through use of 95% confidence intervals. Confidence intervals about a population mean were calculated for six of the gas components run at "expected" operating concentrations. These confidence intervals imply a repeatability for given test results from the Raman equipment between $\pm$0.05% to $\pm$0.2% about the mean percent composition value. The method detection limits and the confidence interval results are contingent upon many factors such as the particular molecule being monitored, the gas stream vibration being monitored, instrument operating conditions, and the associated fiber optics and sample probe assembly.

Initially, the need for any peak area adjustments must be identified and defined. First, the peaks to be used in the Raman spectrum which will be used to measure each molecular component of interest must be determined. For a gas feed stream in a process for the manufacture of polycrystalline silicon, the gases will include one or more of silicon tetrachloride, trichlorosilane, dichlorosilane, monochlorosilane, hydrogen chloride, hydrogen, and nitrogen. The vibrational peak from the sapphire window in the probe that will be used as a reference peak must also be selected. Each selected peak will have a low frequency point and a high frequency point defined for calculating the peak area for each given peak wavelength.

Any additional peak area adjustments that need to be made on the selected peak area measurements must be identified. Peak area adjustments may be needed because of peak overlap from interference bands. For example, in a gaseous system for the manufacture of polycrystalline silicon, a sapphire peak centered at 416 $cm^{-1}$ partially overlaps with a silicon tetrachloride peak that is centered at 424 $cm^{-1}$(defined by a high=435 $cm^{-1}$, and a low=409 $cm^{-1}$). Because accurate measurement of only the silicon tetrachloride peak is needed, a Raman response between 409 $cm^{-1}$and 435

$cm^{-1}$, the contribution to peak area from the sapphire peak centered at 416 $cm^{-1}$ must be removed. There exist multiple techniques for spectrally manipulation to address this problem, including, but not limited to spectral subtraction and deconvolution of spectra.

According to the invention, a peak area ratio between the 416 $cm^{-1}$ sapphire band, with the same high and low frequency points as used to identify the 424 $cm^{-1}$, and a different sapphire reference peak that is centered at 749 $cm^{-1}$ is determined. This ratio is then applied to subtract a scaled value of the 749 $cm^{-1}$ peak area from all future measurements in the 424 $cm^{-1}$ region.

Peak area adjustment values are created as follows. The Raman spectrographic instrument is operated using the provided instrument software to collect a Raman spectrum of only the reference sapphire. The collected spectral data can then be analyzed and processed using any of several available software tools, such as, for example, GRAMS Spectroscopy Software, commercially available from Galactic Industries Corporation. Any necessary peak area adjustment factors are calculated by using known techniques such as, for example, spectral subtraction, spectral deconvolution, or peak area ratios. The area is integrated for all selected peaks, and the peak area adjustment factor may be calculated for each instrument probe. For example, one Peak Area Adjustment Factor = Peak Area (at 416 $cm^{-1}$) ÷ Peak Area (at 749 $cm^{-1}$).

Once any peak area adjustments have been identified and defined, the Raman spectrographic system is calibrated as follows. The Raman spectrographic instrument is operated using a set of known concentrations of reactant gases for each molecular component of interest and collected in the form of Raman spectra. For each molecular component to be measured, a linear regression model is created that plots the ratio of the integral area of a vibrational band from this molecular component over the integral area of the reference sapphire band, allowing for potential peak area adjustments. This calculation is:

$$Ratio = \frac{(\text{Area of molecular component band} - \text{Area of Reference band} \times \text{Area Adjustment factor})}{\text{Area of Reference band}}$$

The determined ratios are plotted against known concentration values to create a linear regression model that is stored and used for quantitative measurement of production samples. The integrated area between these regions is typically chosen to maximize signal response for each molecular component of interest. The value of the slope from the regression curve is retained and stored as the calibration constant for that molecular component. Other forms of regression are equally applicable. The data acquisition is repeated for all of the other molecular components and for other probes that are to be used.

The components of interest are calibrated for each Pilot™-E probe (or other probe) using sample sets of known concentration for each substance of interest. Any other identification parameters, such as sample identity or sensor (probe) identity, that may be used in the operation of the instrument are also collected.

Determining calibration constants for a particular instrument setup will require calibrating each of the desirable gas components at set pressures and temperatures for a given probe, fiber optics, and Raman instrument. One established approach would be to use a linear regression (or other suitable regression) fit over the desirable concentration range. Gas standards were prepared with different, known concentrations of various components at a set temperature and pressure. Each gas standard was exposed to the Raman probe and heated to maintain vaporization while pressure was measured with a certified pressure gauge. The spectra obtained were used to perform the appropriate regression fit. Selected vibrational or rotational peaks for each component was measured and used to perform the appropriate regression fit.

For example, in one calibration of a Pilot-E™ probe, a 500 mW, 785 nm diode laser with a 3 m fiber optic cable at 85 psig and 120 °C was used. These calibration constants were determined for an E probe.

| Components | Selected Vibration/Rotation Peak (1/cm) | Calibration Constant |
|---|---|---|
| Tetrachlorosilane (STC) | 424 | 0.04 |
| Dichlorosilane (DCS) | 2225 | 0.04 |
| Hydrogen | 1034 | 0.91 |
| Trichlorosilane (TCS) | 2260 | 0.05 |
| Nitrogen ($N_2$) | 2328 | 0.40 |
| HCl | 2883 | 0.21 |
| Monochlorosilane | 2201 | 0.02 |
| Silane ($SiH_4$) | 2187 | 0.01 |

## Measuring Chemical Concentrations

Once the instrument is calibrated, it may be used to collect a Raman spectrum of the gases in the feed stream. Peak area ratios for each peak of interest from the Raman spectrum are calculated in accordance with the equation: *Peak Area Ratio(i) = (Area of substance band(i)- Area of Reference band × Area Adjustment factor) ÷ Area of Reference band.* The percent composition of each gas is based on derived calibration constants, where, *Outpout Value (i) = 100x Peak Area Ratio(i) x Calibration Constant(i).* If normalization of the results is desired, a normalization factor is utilized such that: *(Output Value (i) = Output Value(i) ÷ Normalization Factor).*

Display, collect, and store quantification data as desired. Calculation of area integrations for each peak was done using available integration techniques. In a preferred embodiment, commercially available GRAMS software (Galactic Industries Corp.) is used, and the trapezoidal rule for integration and a linear baseline correction is used. Other established techniques for area integration can also be applicable. The same integration technique for both the calibration and the monitoring of production runs should be used.

The quantitative monitoring technique described herein may be used to monitor the concentrations of gases in feed streams for a number of chemical processes. In one embodiment, the monitoring technique is useful to monitor and analyze the gases used in a process for the production of high purity polycrystalline silicon. An example of such a process is illustrated in Fig. 2 and described in greater detail in Arvidson et al., US Pub. No. 2008/0056979. In the Arvidson et al. process, a fluidized bed reactor and a Siemens reactor are used to produce polycrystalline silicon.

As shown in Fig. 2, a Siemens feed gas stream 101 is fed to a Siemens reactor 102 containing a U-rod 103. The Siemens feed gas stream may comprise trichlorosilane or other halogenated silanes. The U-rod may comprise two polycrystalline silicon seed rods connected together by a polycrystalline silicon bridge. Polycrystalline silicon is deposited from the feed gas stream 101 onto the U-rod to produce polycrystalline silicon product in rod form 103. The product in rod form 103 is removed from the Siemens reactor 102 at the end of a batch. The vent gas stream 104 from the Siemens reactor may comprise trichlorosilane, silicon tetrachloride, hydrogen, hydrogen chloride and silicon powder.

The vent gas stream 104 is fed into a fluidized bed reactor 105 containing silicon seed particles. This vent gas stream 104 may optionally be supplemented with additional feed gases, with additional inert gases, or both, in supplement stream 106. The supplement stream 106 may comprise additional chlorosilanes. The additional chlorosilanes may comprise trichlorosilane, silicon tetrachloride, or combinations thereof. Polycrystalline silicon is deposited from the feed gas stream(s) 104, 106 onto the silicon seed particles. Polycrystalline silicon product in bead form is removed from the fluidized bed reactor 105 in product stream 107. A vent gas stream 108 may comprise hydrogen, hydrogen chloride, and chlorosilanes, e.g. trichlorosilane and silicon tetrachloride, is removed from the fluidized bed reactor 105 and sent to recovery system 109. Hydrogen may be recovered and sent back to the Siemens reactor 102 through line 110. Chlorosilanes may be recovered through line 111 and recycled or sold. Hydrogen chloride may be recovered and sold. Silicon tetrachloride may be hydrogenated or otherwise converted to trichlorosilane, and the resulting trichlorosilane may be recycled to the Siemens reactor 102.

The quantitative monitoring process as described herein may be used to monitor gases in either or both of the gaseous streams 101 and 106. Each gaseous component should be present in a predetermined concentration to provide a high purity silicon product. Adjustments in the amounts (feed rates) of gaseous components in these feed streams can be made contemporaneously so that any deviations from optimal values can be addressed and corrected.

Having described the invention in detail and by reference to specific embodiments thereof, it will be apparent that modifications and variations are possible without departing from the scope of the invention defined in the appended claims. More specifically, although some aspects of the present invention are identified herein as preferred or particularly advantageous, it is contemplated that the present invention is not necessarily limited to these preferred aspects of the invention.

## Claims

**1.** A method for quantitatively monitoring gas phase materials in a chemical process comprising:

providing a gaseous feed stream containing one or more reactant gases of interest;
exposing said gaseous feed stream to coherent radiation from a Raman spectroscopic device which has been previously calibrated by selecting peaks in a Raman spectrum for each gas of interest in said gaseous feed stream, each peak including a low frequency point and a high frequency point;
collecting Raman spectra for known concentrations for each gas of interest;
calculating the peak areas of the selected peaks;
selecting a reference peak in a Raman spectrum for a reference material in said Raman spectroscopic device, said reference peak including a low frequency point and a high frequency point;

collecting Raman spectra for said reference material;
calculating a reference peak area for said reference material;
identifying any peak area adjustments due to peak overlap from the selected peaks and said reference peak and removing the contribution to the peak area of said selected peak of said reference peak by selecting a second reference peak in the Raman spectra of said reference material that has no overlap with the selected peak, calculating the ratio of the area of said reference peak with the area of said second reference peak to determine a peak area ratio adjustment factor; and
applying said peak area adjustment factor to selected peak areas for the gases of interest;
calculating the ratios of the selected peak area for each gas of interest with the reference peak area to establish calibration constants for each gas of interest;
acquiring a Raman spectroscopic signal from each of the gaseous components in said feed stream;
analyzing said spectroscopic signal to determine the presence and concentration of each of said gaseous components; and displaying the results of said analysis.

2. A method as claimed in claim 1 including adjusting the relative amounts of the gaseous components of said feed stream based on the analysis of said spectroscopic signal.

3. A method as claimed in claim 1 in which the calibration constants for each gas of interest are determined by calculating the ratios of the selected peak areas with a selected reference peak area, wherein

$$\text{Ratio} = (\text{Peak Area of Selected Gas} - \text{Peak Area of Reference Material} \times \text{Area Adjustment Factor}) \div \text{Peak Area of Reference Material};$$

and plotting calculated ratios against known concentration values for the selected gas of interest to create a linear regression model.

## Patentansprüche

1. Verfahren zum quantitativen Überwachen von Gasphasenmaterialien in einem chemischen Verfahren, umfassend:

Bereitstellen eines gasförmigen Zufuhrstroms, der eines oder mehrere Reaktionsgase von Interesse enthält;
Aussetzen des gasförmigen Zufuhrstroms an kohärente Strahlung aus einer Raman-Spektroskopievorrichtung, die kurz zuvor kalibriert wurde, indem Peaks in einem Raman-Spektrum für jedes Gas von Interesse in dem gasförmigen Zufuhrstrom ausgewählt wurden, wobei jeder Peak einen Niederfrequenzpunkt und einen Hochfrequenzpunkt aufweist;
Erfassen von Raman-Spektren für bekannte Konzentrationen für jedes Gas von Interesse;
Berechnen der Peakflächen der ausgewählten Peaks;
Auswählen eines Referenzpeaks in einem Raman-Spektrum für ein Referenzmaterial in der Raman-Spektroskopievorrichtung, wobei der Referenzpeak einen Niederfrequenzpunkt und einen Hochfrequenzpunkt aufweist;
Erfassen von Raman-Spektren für das Referenzmaterial;
Berechnen einer Referenzpeakfläche für das Referenzmaterial;
Identifizieren jeglicher Peakflächenanpassungen aufgrund von Peaküberschneidung von den ausgewählten Peaks und dem Referenzpeak und Entfernen des Beitrags des Referenzpeaks zur Peakfläche des ausgewählten Peaks durch Auswählen eines zweiten Referenzpeaks in den Raman-Spektren des Referenzmaterials, der keine Überschneidung mit dem ausgewählten Peak aufweist, Berechnen des Verhältnisses der Fläche des Referenzpeaks zur Fläche des zweiten Referenzpeaks, um einen Peakflächenverhältnis-Anpassungsfaktor zu bestimmen; und Anwenden des Peakflächen-Anpassungsfaktors auf die ausgewählten Peakflächen für die Gase von Interesse;
Berechnen der Verhältnisse der ausgewählten Peakfläche für jedes Gas von Interesse zur Referenzpeakfläche, um Kalibrierungskonstanten für jedes Gas von Interesse aufzustellen;
Erfassen eines Raman-Spektroskopiesignals von jedem der gasförmigen Bestandteile in dem Zufuhrstrom;
Analysieren des spektroskopischen Signals, um die Gegenwart und die Konzentration jedes der gasförmigen Bestandteile zu bestimmen; und Anzeigen der Ergebnisse der Analyse.

2. Verfahren nach Anspruch 1, das Anpassen der relativen Mengen der gasförmigen Bestandteile des Zufuhrstroms

auf der Basis der Analyse des spektroskopischen Signals umfassend.

3. Verfahren nach Anspruch 1, wobei die Kalibrierungskonstanten für jedes Gas von Interesse durch Berechnen der Verhältnisse der ausgewählten Peakflächen zu einer ausgewählten Referenzpeakfläche bestimmt werden, wobei

Verhältnis = (Peakfläche von ausgewähltem Gas - Peakfläche von Referenzmaterial x Flächenanpassungsfaktor) ÷ Peakfläche von Referenzmaterial;

und Eintragen berechneter Verhältnisse als Funktion bekannter Konzentrationswerte für das ausgewählte Gas von Interesse, um ein lineares Regressionsmodell zu erstellen.

**Revendications**

1. Procédé pour surveiller quantitativement des matériaux de phase gazeuse dans un procédé chimique comprenant les étapes consistant à :

fournir un courant d'alimentation gazeux contenant un ou plusieurs gaz réactifs d'intérêt ;
exposer ledit courant d'alimentation gazeux à un rayonnement cohérent d'un dispositif de spectroscopie Raman qui a été préalablement étalonné en sélectionnant des pics dans un spectre Raman pour chaque gaz d'intérêt dans ledit courant d'alimentation gazeux, chaque pic incluant un point de fréquence basse et un point de fréquence haute ;
recueillir des spectres Raman pour des concentrations connues de chaque gaz d'intérêt ;
calculer les aires de pic des pics sélectionnés ;
choisir un pic de référence dans un spectre Raman pour un matériau de référence dans ledit dispositif de spectroscopie Raman, ledit pic de référence incluant un point de fréquence basse et un point de fréquence haute ;
recueillir des spectres Raman pour ledit matériau de référence ;
calculer une aire de pic de référence pour ledit matériau de référence ;
identifier les éventuels ajustements d'aires de pics dus à un chevauchement des pics sélectionnés et dudit pic de référence et supprimer la contribution à l'aire de pic dudit pic sélectionné dudit pic de référence en sélectionnant un second pic de référence dans les spectres Raman dudit matériau de référence qui ne présente pas de chevauchement avec le pic choisi, calculer le rapport de l'aire dudit pic de référence sur l'aire dudit second pic de référence afin de déterminer un facteur d'ajustement du rapport d'aires de pics ; et appliquer ledit facteur d'ajustement des aires de pic aux aires des pics sélectionnés pour les gaz d'intérêt ;
calculer les rapports de l'aire du pic sélectionné pour chaque gaz d'intérêt sur l'aire du pic de référence afin d'établir des constantes d'étalonnage pour chaque gaz d'intérêt ;
acquérir un signal spectroscopique Raman issu de chacun des composants gazeux dudit courant d'alimentation ;
analyser ledit signal spectroscopique pour déterminer la présence et la concentration de chacun desdits composants gazeux ; et afficher les résultats de ladite analyse.

2. Procédé tel que revendiqué dans la revendication 1 incluant l'ajustement des quantités relatives des composants gazeux dudit courant d'alimentation sur la base de l'analyse dudit signal spectroscopique.

3. Procédé tel que revendiqué dans la revendication 1 dans lequel les constantes d'étalonnage pour chaque gaz d'intérêt sont déterminées en calculant les rapports des aires des pics sélectionnés sur une aire de pic de référence sélectionné, où

Rapport = (Aire de pic du gaz sélectionné — Aire de pic du matériau de référence x Facteur d'ajustement de l'aire) ÷ Aire de pic du matériau de référence ;

et en représentant graphiquement les rapports calculés en fonction des valeurs de concentration du gaz d'intérêt choisi afin de créer un modèle de régression linéaire.

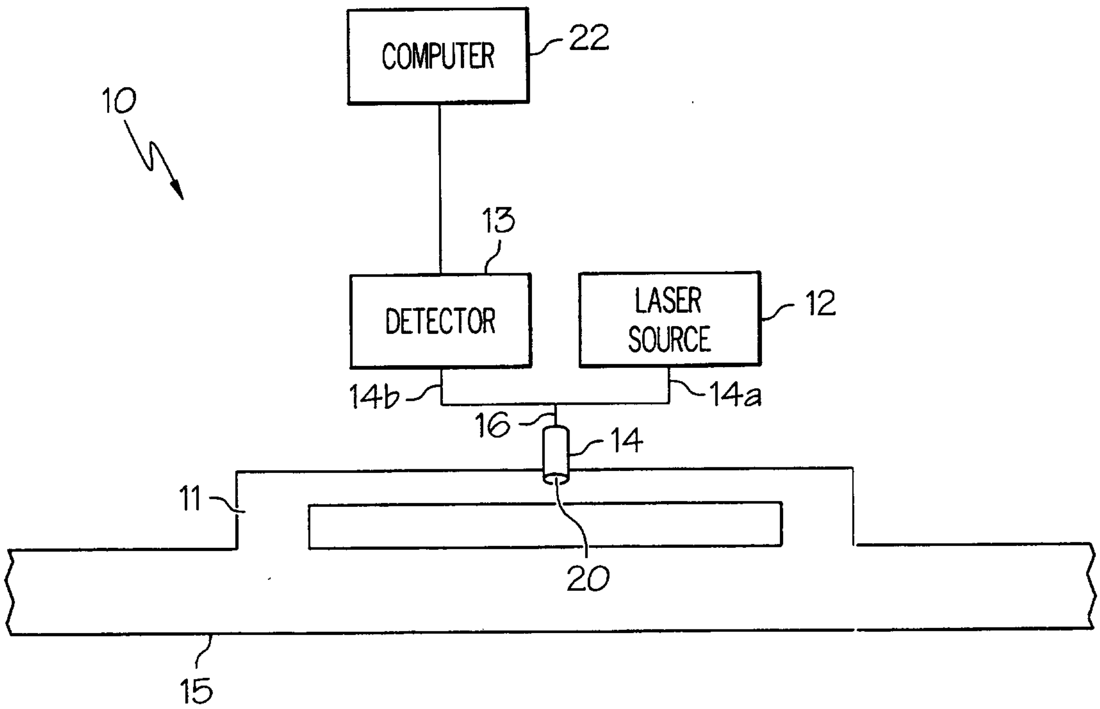
COMPUTER
22
10
13
DETECTOR
LASER SOURCE
12
14b
14a
16
14
11
20
15

FIG. 1

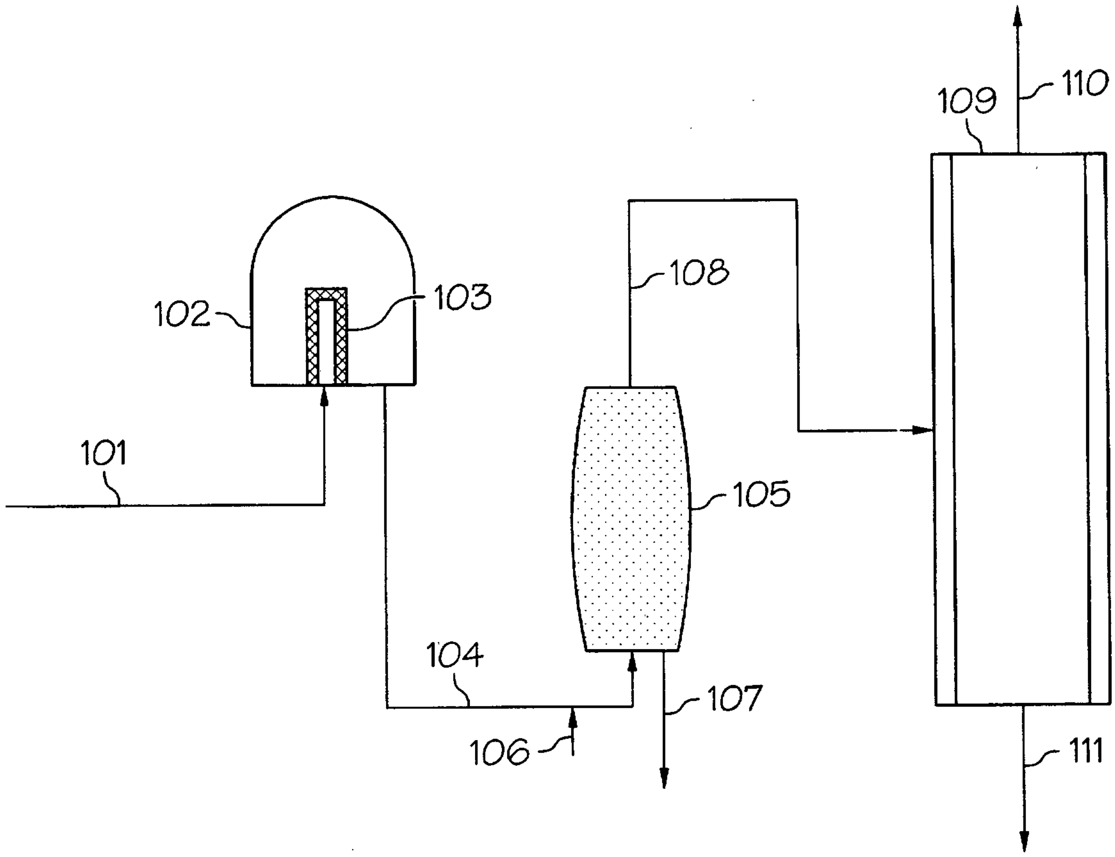


FIG. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20080056979 A, Arvidson
- US 20050154129 A
- US 20060100793 A
- US 6723804 B
- GB 2361767 A